# FASCICULE DE BREVET EUROPEEN

(11) **EP 3 683 460 B1**
(45) Date de publication et mention de la délivrance du brevet: **13.10.2021**
(21) Numéro de dépôt: 19209328.4
(22) Date de dépôt: 15.11.2019
(51) Int. Cl.: F16B 39/04, F16B 39/08

(54) **BOULON EQUIPE D'UN DISPOSITIF ANTI-ROTATION**
BOLZEN, DER MIT EINER DREHHEMMVORRICHTUNG AUSGESTATTET IST
BOLT PROVIDED WITH AN ANTI-ROTATION DEVICE

(30) Priorité: 21.01.2019 FR 1900501
(43) Date de publication de la demande: 22.07.2020
(73) Titulaire: AIRBUS OPERATIONS (S.A.S.), 31060 Toulouse (FR)
(72) Inventeur: MESSINA, Paolo, 31100 Toulouse (FR)
(74) Mandataire: Fantin, Laurent

(56) Documents cités:
- WO-A1-2014/177499
- DE-C- 540 815
- US-A- 976 928
- US-A- 1 651 187
- US-A- 1 770 523

## Description

La présente demande se rapporte à un boulon équipé d'un dispositif anti-rotation.

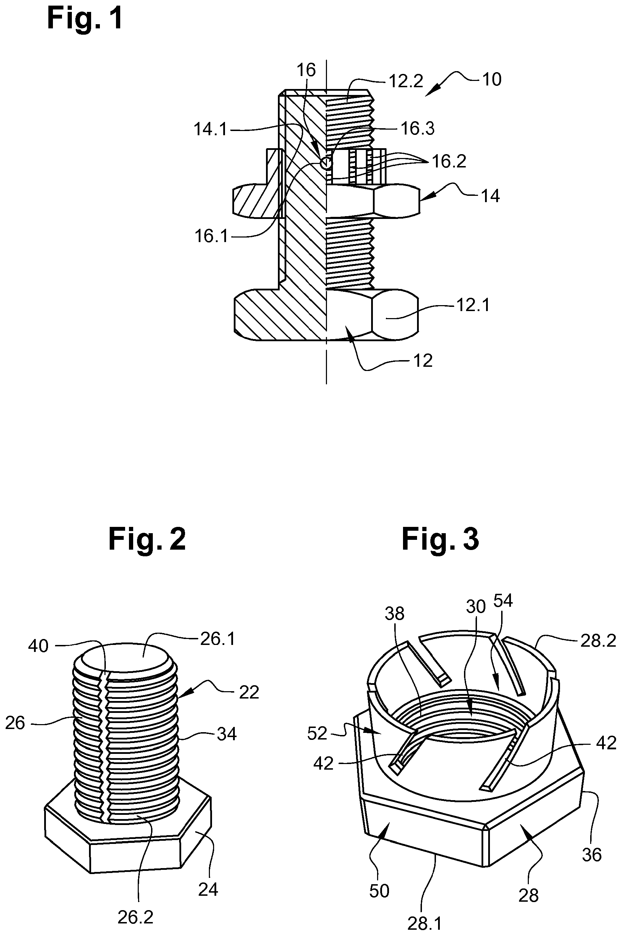

Selon un mode de réalisation connu visible sur la figure 1, un boulon 10 comprend une vis 12 qui présente une tête 12.1 et une tige filetée 12.2 ainsi qu'un écrou 14 qui présente un trou taraudé 14.1 configuré pour se visser sur la tige filetée 12.2 de la vis 12.

Pour la suite de la description, une direction longitudinale est parallèle à l'axe de la tige filetée 12.2 de la vis 12 ou du trou taraudé 14.1 de l'écrou 14 et un plan transversal est perpendiculaire à l'axe de la tige filetée 12.2 de la vis 12 ou du trou taraudé 14.1 de l'écrou 14.

Ce boulon 10 est équipé d'un dispositif anti-rotation 16 pour empêcher l'écrou 14 de se dévisser. Le dispositif anti-rotation 16 comprend un trou transversal 16.1 ménagé dans la tige filetée 12.2, une pluralité de fentes longitudinales 16.2 ménagées dans l'écrou 14 et une épingle 16.3 configurée pour se loger dans le trou transversal 16.1 de la tige filetée 12.2 et dans deux fentes longitudinales 16.2 diamétralement opposées de l'écrou 14.

En fonctionnement, l'écrou 14 est vissé sur la tige filetée 12.2 jusqu'à la position souhaitée. Pour immobiliser l'écrou 14 en rotation par rapport à la vis 12, l'épingle 16.3 est insérée dans le trou transversal 16.1 et positionnée dans deux fentes longitudinales 16.2 de l'écrou 14 situées dans le prolongement du trou transversal 16.1 de la tige filetée 12.2. Ce mode de réalisation n'est pas pleinement satisfaisant car l'écrou 14 ne peut être immobilisé que sur une plage restreinte de positions qui est fonction de la position du trou transversal 16.1 et de la longueur des fentes longitudinales 16.2. De plus, l'une des zones situées dans le prolongement du trou transversal 16.1 doit être dégagée pour permettre l'insertion de l'épingle 16.3.

Le document US976928 propose un boulon équipé d'un dispositif anti-rotation. Selon ce document, la tige filetée de la vis présente plusieurs couples de gorges longitudinales diamétralement opposées. En complément, l'écrou comprend un prolongement tubulaire qui présente un diamètre intérieur supérieur à celui de la tige filetée de la vis ainsi que deux couples de fentes longitudinales diamétralement opposées. Le dispositif anti-rotation comprend un anneau configuré pour se loger entre le prolongement de l'écrou et la tige filetée de la vis. L'anneau présente deux ergots intérieurs, diamétralement opposés, configurés pour se loger dans deux gorges longitudinales de la tige filetée de la vis diamétralement opposées, ainsi que deux ergots extérieurs, diamétralement opposés, configurés pour se loger dans deux fentes longitudinales du prolongement de l'écrou diamétralement opposées.

En fonctionnement, lorsque l'anneau est positionné entre le prolongement de l'écrou et la tige filetée de la vis, il bloque en rotation l'écrou par rapport à la vis.

Ce dispositif anti-rotation n'est pas pleinement satisfaisant car l'anneau peut ne pas rester en position entre le prolongement de l'écrou et la tige filetée de la vis en fonctionnement.

La présente invention vise à remédier à tout ou partie des inconvénients de l'art antérieur.

A cet effet, l'invention a pour objet un boulon comprenant une tige filetée présentant au moins un filet hélicoïdal et au moins une gorge longitudinale, un écrou présentant un trou taraudé configuré pour se visser sur la tige filetée et au moins une fente ainsi qu'un dispositif anti-rotation configuré pour immobiliser en rotation l'écrou par rapport à la tige filetée, ledit dispositif anti-rotation comprenant un anneau qui entoure au moins la tige filetée et qui présente au moins un premier ergot configuré pour se loger dans la gorge longitudinale de la tige filetée et dans la fente de l'écrou en fonctionnement, caractérisé en ce que la fente de l'écrou est oblique et comporte une première extrémité débouchante et une deuxième extrémité non débouchante, ladite fente oblique étant inclinée de la première extrémité vers la deuxième extrémité dans un même sens que le filet hélicoïdal de la tige filetée,

Selon l'invention, le dispositif anti-rotation peut être mis en place aisément sans avoir besoin d'un outil. L'anneau a une masse restreinte et peut être réutilisé tant qu'il n'est pas endommagé. La perte de couple de serrage produite par le dispositif anti-rotation peut être déterminée précisément. Enfin, l'inclinaison de la fente de l'écrou permet de conserver l'anneau en position en fonctionnement.

Selon une autre caractéristique, le premier ergot de l'anneau est configuré pour se loger dans la gorge longitudinale de la tige filetée en fonctionnement et l'anneau comprend au moins un deuxième ergot configuré pour se loger dans la fente oblique de l'écrou en fonctionnement.

Selon une autre caractéristique, la tige filetée comprend deux gorges longitudinales diamétralement opposées et l'anneau comprend deux premiers ergots, diamétralement opposés, configurés pour se loger dans les deux gorges longitudinales.

Selon une autre caractéristique, l'écrou comprend plusieurs fentes obliques régulièrement réparties sur toute la circonférence de l'écrou et la tige filetée comprend deux gorges longitudinales formant entre elles un angle π/n, n étant le nombre de fentes obliques de l'écrou.

Selon une autre caractéristique, chaque fente oblique forme avec un plan transversal un angle compris entre 30° et 75°.

Selon une autre caractéristique, l'écrou comprend un corps dans lequel est prévu le trou taraudé et une portion tubulaire, coaxiale au trou taraudé, comportant la (ou les) fente(s) oblique(s).

Selon un premier mode de réalisation, la portion tubulaire présente un diamètre intérieur supérieur à celui du trou taraudé pour former un logement entre la portion tubulaire et la tige filetée lorsque la vis est vissée dans l'écrou, l'anneau étant configuré pour se loger dans ledit logement.

Selon une autre caractéristique, chaque premier ergot de l'anneau est aligné radialement avec un deuxième ergot, chaque premier ergot étant en saillie par rapport à une face intérieure de l'anneau et chaque deuxième ergot étant en saillie par rapport à une surface extérieure de l'anneau.

Selon un deuxième mode de réalisation, l'anneau a un diamètre intérieur supérieur au diamètre extérieur de la portion tubulaire de manière à l'entourer en fonctionnement et les premiers ergots et les deuxièmes ergots sont confondus, chaque premier ergot étant configuré pour se loger en fonctionnement dans une fente oblique et dans une gorge longitudinale.

D'autres caractéristiques et avantages ressortiront de la description de l'invention qui va suivre, description donnée à titre d'exemple uniquement, en regard des dessins annexés parmi lesquels :
- La figure 1 est une demie-vue et une demie-coupe d'un boulon équipé d'un dispositif anti-rotation qui illustre un mode de réalisation de l'art antérieur,
- La figure 2 est une vue en perspective d'une vis qui illustre un mode de réalisation de l'invention,
- La figure 3 est une vue en perspective d'un écrou qui illustre un mode de réalisation de l'invention,
- La figure 4 est une vue en perspective d'un anneau d'immobilisation en rotation qui illustre un mode de réalisation de l'invention,
- La figure 5 est une vue en perspective d'une partie d'un boulon équipé d'un dispositif anti-rotation qui illustre un mode de réalisation de l'invention,
- La figure 6 est une vue latérale d'une partie d'un boulon équipé d'un dispositif anti-rotation lors de sa mise en place qui illustre un mode de réalisation de l'invention,
- La figure 7 est une vue latérale d'une partie d'un boulon équipé d'un dispositif anti-rotation dans un état bloqué qui illustre un mode de réalisation de l'invention,
- La figure 8 est une vue latérale développée d'un écrou qui illustre un mode de réalisation de l'invention,
- La figure 9 est une section transversale d'un écrou qui illustre un mode de réalisation de l'invention,
- La figure 10 est une vue en perspective d'un boulon équipé d'un dispositif anti-rotation qui illustre un premier mode de réalisation de l'invention, et
- La figure 11 est une vue en perspective d'un boulon équipé d'un dispositif anti-rotation qui illustre un deuxième mode de réalisation de l'invention.

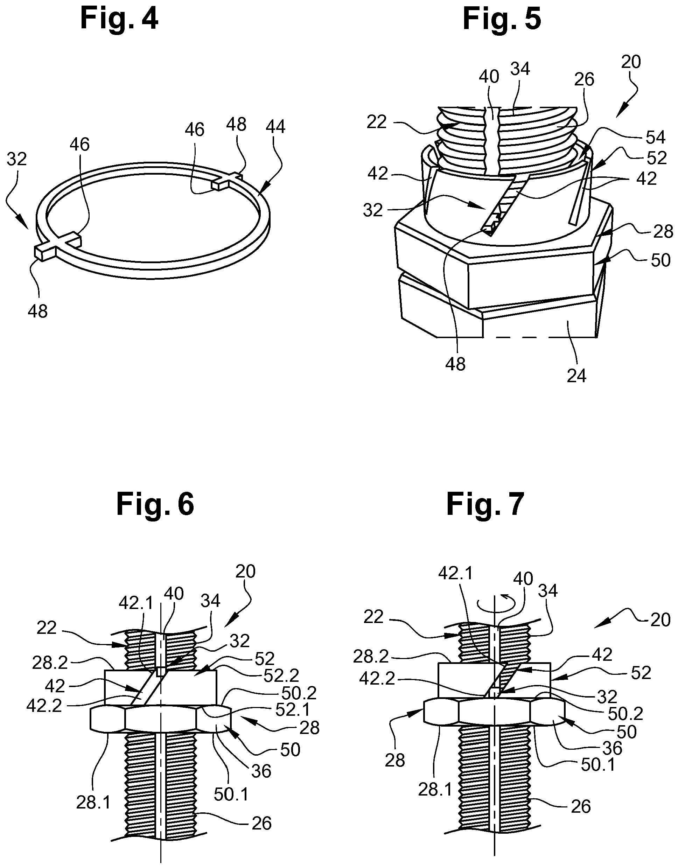

Sur les figures 5 à 7, 10 et 11, on a représenté un boulon 20 comportant une vis 22 présentant une tête 24 et une tige filetée 26, un écrou 28 présentant un trou taraudé 30 configuré pour se visser sur la tige filetée 26 ainsi qu'un dispositif anti-rotation 32 configuré pour immobiliser en rotation l'écrou 28 par rapport à la vis 22, et plus particulièrement à la tige filetée 26.

Selon un mode de réalisation visible sur la figure 2, la tige filetée 26 comprend au moins un premier filet hélicoïdal 34 présentant un pas de vis et un sens de vissage. Cette tige filetée 26 s'étend d'une première extrémité 26.1 à partir de laquelle l'écrou 28 est vissé jusqu'à une deuxième extrémité 26.2 au niveau de laquelle est située la tête 24. Selon un mode de réalisation, le premier filet hélicoïdal 34 peut s'étendre d'une extrémité à l'autre de la tige filetée 26. En variante, le premier filet hélicoïdal 34 pourrait seulement s'étendre sur une partie de la tige filetée 26, à partir de la première extrémité 26.1.

Selon une configuration, la tête 24 est hexagonale. Bien entendu, l'invention n'est pas limitée à cette configuration. D'autres solutions pourraient être envisagées pour immobiliser en rotation la vis ou la faire pivoter. Ainsi, la vis 22 pourrait être sans tête, comme un goujon par exemple, et comprendre une empreinte au niveau de la deuxième extrémité 26.2 de la tige filetée 26.

L'écrou 28 comprend une paroi périphérique 36 hexagonale. Bien entendu, l'invention n'est pas limitée à cette configuration. D'autres solutions pourraient être envisagées pour immobiliser en rotation l'écrou ou le faire pivoter.

Selon un mode de réalisation visible sur la figure 3, le trou taraudé 30 de l'écrou 28 comprend au moins un deuxième filet hélicoïdal 38 présentant un pas de vis et un sens de vissage adaptés à ceux du premier filet hélicoïdal 34 de la tige filetée 26. Selon une configuration, le sens de vissage de l'écrou 28 correspond au sens horaire. Dans ce cas, comme illustré sur les figures 6 et 7, le premier filet hélicoïdal 34 est incliné et descend de la droite vers la gauche lorsque la vis 22 est observée selon une vue latérale.

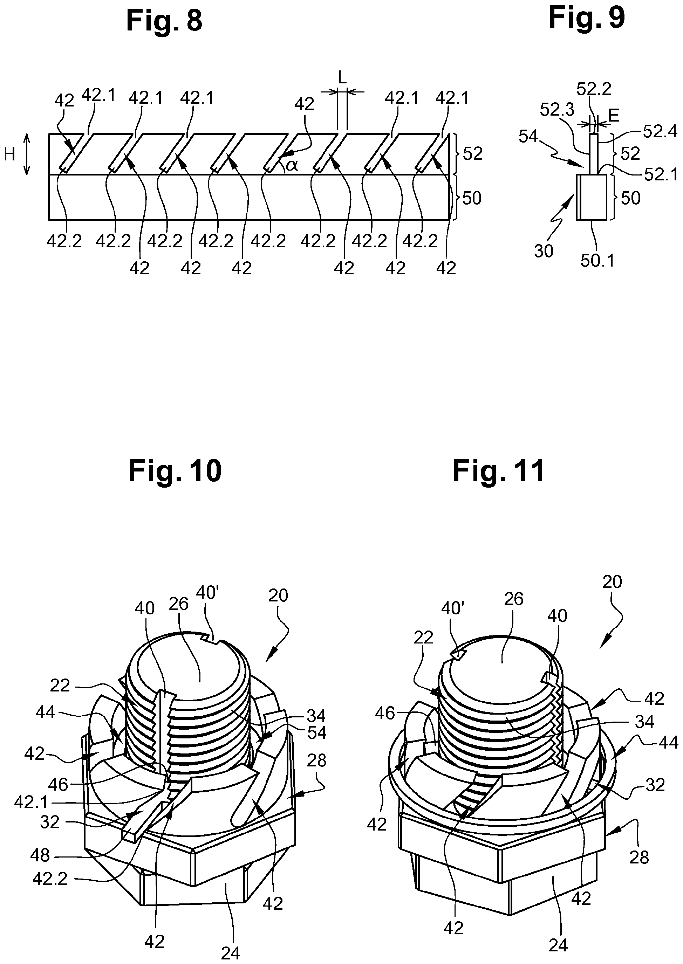

Selon un mode de réalisation visible sur les figures 4, 5 et 10, la tige filetée 26 comprend au moins une gorge longitudinale 40, l'écrou 28 comprend au moins une fente oblique 42 et le dispositif anti-rotation 32 comprend un anneau 44 qui entoure au moins la tige filetée 26 et qui présente au moins un premier ergot 46 configuré pour se loger dans la gorge longitudinale 40 de la tige filetée 26 en fonctionnement ainsi qu'au moins un deuxième ergot 48 configuré pour se loger dans la fente oblique 42 de l'écrou 28 en fonctionnement. Selon une configuration visible sur la figure 10, la tige filetée 26 comprend deux gorges longitudinales 40, 40'. Ces deux gorges longitudinales 40, 40' sont diamétralement opposées. Chaque gorge longitudinale 40, 40' peut s'étendre d'une extrémité à l'autre de la tige filetée 26 ou seulement sur une partie, à partir de la première extrémité 26.1 de la tige filetée 26. Selon un mode de réalisation, chaque gorge longitudinale 40, 40' a, dans un plan transversal, une section en U et présente deux parois latérales planes, parallèles entre elles et un fond plan perpendiculaire aux parois latérales.

Selon une autre configuration, la tige filetée 26 comprend deux gorges longitudinales 40, 40' qui ne sont pas diamétralement opposées, les deux gorges longitudinales 40, 40' formant entre elles un angle π/n, n étant le nombre de fentes obliques 42 prévues au niveau de l'écrou 28. Cette configuration permet d'améliorer la précision. Selon cette configuration, le dispositif anti-rotation 32 comprend au moins un premier ergot 42 configuré pour se loger dans l'une des gorges longitudinales 40, 40' et dans l'une des fentes obliques 42.

Selon un mode de réalisation, l'écrou 28 comprend deux fentes obliques 42 diamétralement opposées.

Selon un mode de réalisation visible sur les figures 3, 10, 11, l'écrou 28 comprend plusieurs fentes obliques 42 réparties régulièrement sur toute la circonférence de l'écrou 28. Selon une configuration, les fentes obliques 42 sont en nombre pair.

Chaque fente oblique 42 forme un angle α avec un plan transversal inférieur à 90°. Chaque fente oblique 42 s'étend d'une première extrémité 42.1, qui débouche au niveau de la deuxième extrémité 28.2 de l'écrou 28, jusqu'à une deuxième extrémité 42.2 non débouchante. En complément chaque fente oblique 42 est inclinée de la première extrémité 42.1 vers la deuxième extrémité 42.2 dans le même sens que le premier filet hélicoïdal 34 de la tige filetée 26. Ainsi, comme illustré sur les figures 6 et 7, lorsque le sens de vissage de l'écrou 28 correspond au sens horaire, chaque fente oblique 42 descend de la droite vers la gauche lorsque l'écrou 28 est observé selon une vue latérale.

Toutes les fentes obliques 42 forment le même angle α avec un plan transversal. Selon une configuration, l'angle α est compris entre 30° et 75°. Selon l'exemple illustré, l'angle α est d'environ 60°. Selon une configuration, chaque fente oblique 42 est rectiligne. Cependant, l'invention n'est pas limitée à ces dimensions et à cette géométrie. Ainsi, les fentes 42 pourraient ne pas être obliques.

L'écrou 28 s'étend, selon une direction longitudinale, entre une première extrémité 28.1 et une deuxième extrémité 28.2, la première extrémité 28.1 correspondant à celle via laquelle est introduite la tige filetée 26.

Selon un mode de réalisation, l'écrou 28 comprend un corps 50 dans lequel est prévu le trou taraudé 30 et une portion tubulaire 52, coaxiale au trou taraudé 30, comportant la ou les fente(s) oblique(s) 42. Le corps 50 et la portion tubulaire 52 ne forment qu'une même et unique pièce.

Le corps 50 présente une première face transversale 50.1 qui correspond à la première extrémité 28.1 de l'écrou 28 et une deuxième face transversale 50.2. Les première et deuxième faces transversales 50.1, 50.2 sont sensiblement parallèles et reliées par le trou taraudé 30 et par la paroi périphérique 36.

La portion tubulaire 52 comprend une première extrémité 52.1 reliée à la deuxième face transversale 50.2 du corps 50 et une deuxième extrémité 52.2 qui correspond à la deuxième extrémité 28.2 de l'écrou 28. La portion tubulaire 52 présente une face intérieure 52.3, orientée vers l'axe du trou taraudé 30 et une face extérieure 52.4 opposée à la face intérieure 52.3.

Selon une première variante, chaque fente oblique 42 est traversante et s'étend de la face intérieure 52.3 jusqu'à la face extérieure 52.4. Selon une deuxième variante, chaque fente oblique 42 n'est pas traversante et se présente sous la forme d'une gorge, prévue au niveau de la face intérieure 52.3, dont le fond est distant de la face extérieure 52.4.

Selon un mode de réalisation, chaque fente oblique 42 s'étend de la première extrémité 52.1 jusqu'à la deuxième extrémité 52.1 de la portion tubulaire. Selon un autre mode de réalisation, chaque fente oblique 42 s'étend seulement sur une partie de la portion tubulaire 52 à partir de sa première extrémité 52.1.

A titre d'illustration, la portion tubulaire 52 a une épaisseur E de l'ordre de 2 mm, une hauteur H de l'ordre de 4 mm et présente 6 ou 8 fentes obliques 42 qui ont une largeur L de l'ordre de 2 mm.

Selon un premier mode de réalisation, la portion tubulaire 52 présente un diamètre intérieur (diamètre de la face intérieure 52.3) supérieur à celui du trou taraudé 30 pour former un logement 54 entre la portion tubulaire 52 et la tige filetée 26 lorsque la vis 22 est vissée dans l'écrou 28, comme illustré sur les figures 5, 9 et 10. Selon ce premier mode de réalisation, l'anneau 44 présente un diamètre intérieur légèrement supérieur au diamètre de la tige filetée 26 de la vis 22 et un diamètre extérieur légèrement inférieur au diamètre intérieur de la portion tubulaire 52 pour que l'anneau 44 puisse se loger en fonctionnement dans le logement 54, entre la tige filetée 26 et la portion tubulaire 52.

Selon le premier mode de réalisation, chaque premier ergot 46 est aligné radialement avec un deuxième ergot 48, chaque premier ergot 46 étant en saillie par rapport à une face intérieure de l'anneau 44 et chaque deuxième ergot 48 étant en saillie par rapport à une surface extérieure de l'anneau 44. Selon une configuration, l'anneau 44 comprend deux premiers ergots 46 diamétralement opposés, un pour chaque gorge longitudinale 40, 40', et deux deuxièmes ergots 48, chacun d'eux étant aligné avec un premier ergot 46.

Cependant, l'invention n'est pas limitée à cet agencement pour les premier et deuxième ergots 46, 48. Ainsi, ils pourraient ne pas être alignés.

Selon un deuxième mode de réalisation visible sur la figure 11, la portion tubulaire 52 présente un diamètre intérieur (diamètre de la face intérieure 52.3) légèrement supérieur à celui du trou taraudé 30. Selon ce deuxième mode de réalisation, l'anneau 44 a un diamètre intérieur supérieur au diamètre extérieur de la portion tubulaire 52. Ainsi, en fonctionnement, l'anneau 44 entoure la portion tubulaire 52. Selon ce deuxième mode de réalisation, les premiers ergots 46 et les deuxièmes ergots 48 sont confondus et l'anneau 44 ne comprend que des premiers ergots 46. Ainsi, chaque premier ergot 46 se loge en fonctionnement dans une fente oblique 42 et dans une gorge longitudinale 40. Selon une configuration, l'anneau 44 comprend deux premiers ergots 46 diamétralement opposés.

Le principe de fonctionnement du dispositif anti-rotation est maintenant expliqué au regard des figures 6 et 7. L'écrou 28 est vissé sur la tige filetée 26 en utilisant si besoin un outil pour contrôler le couple de serrage. Lorsque le couple de serrage est atteint, l'anneau 44 est positionné autour de la tige filetée 26, les premiers ergots 46 étant chacun logés dans une des gorges longitudinales 40, 40'. Dès lors, l'anneau 44 ne peut pas pivoter autour de la tige filetée 26. La première extrémité 42.1 d'une des fentes obliques 42 est disposée au droit d'une des gorges longitudinales 40, 40' de manière à permettre à chaque premier ergot 46 ou deuxième ergot 48 d'être positionné au niveau de la première extrémité 42.1 d'une fente oblique 42. En dévissant légèrement l'écrou 28, l'anneau 44 se translate vers la première extrémité 28.1 de l'écrou 28 et chaque premier ergot 46 ou deuxième ergot 48 se déplace vers la deuxième extrémité 42.2 de la fente oblique 42 dans laquelle il est logé. Dès que la première extrémité 42.1 de la fente oblique 42 n'est plus disposée au droit d'une des gorges longitudinales 40, 40', l'anneau 44 ne peut plus être retiré. Si l'écrou 28 continue de se dévisser, chaque premier ergot 46 ou deuxième ergot 48 se déplace vers la deuxième extrémité 42.2 de la fente oblique 42 dans laquelle il est logé. Lorsqu'il atteint la deuxième extrémité 42.2 de la fente oblique 42, il immobilise en rotation l'écrou 28 qui ne peut plus se dévisser.

En présence de six fentes obliques 42, la perte de couple de serrage lors du dévissage de l'écrou 28 pour l'immobiliser en rotation est égale à une fonction max(360°/6 - atan(4/πD) ; atan(4/πD)), D étant le diamètre de la portion tubulaire 52.

Pour dévisser l'écrou, il convient de revisser l'écrou 28 jusqu'à ce que chaque premier ergot 46 ou deuxième ergot 48 atteigne la première extrémité 42.1 de la fente oblique 42 qui le loge. Dès lors l'anneau 44 peut se translater jusqu'à la première extrémité 26.1 de la tige filetée 26 et l'écrou 28 peut être dévissé.

Le dispositif anti-rotation 32 peut être mis en place aisément sans avoir besoin d'outil. L'anneau 44 a une masse restreinte et peut être réutilisé tant qu'il n'est pas endommagé. Enfin, la perte de couple de serrage peut être déterminée précisément en fonction de l'angle α et de la longueur de chaque fente oblique 42.

## Revendications

1. Boulon comprenant une tige filetée (26) présentant au moins un filet hélicoïdal (34) et au moins une gorge longitudinale (40), un écrou (28) présentant un trou taraudé (30) configuré pour se visser sur la tige filetée (26) et au moins une fente (42) ainsi qu'un dispositif anti-rotation (32) configuré pour immobiliser en rotation l'écrou (28) par rapport à la tige filetée (26), le dispositif anti-rotation (32) comprenant un anneau (44) qui entoure au moins la tige filetée (26) et qui présente au moins un premier ergot (46) configuré pour se loger dans la gorge longitudinale (40) de la tige filetée (26) et dans la fente (42) de l'écrou (28) en fonctionnement, **caractérisé en ce que** la fente (42) de l'écrou (28) est oblique et comporte une première extrémité (42.1) débouchante et une deuxième extrémité (42.2) non débouchante, ladite fente oblique (42) étant inclinée de la première extrémité (42.1) vers la deuxième extrémité (42.2) dans un même sens que le filet hélicoïdal (34) de la tige filetée (26).

2. Boulon selon la revendication 1, **caractérisé en ce que** le premier ergot (46) de l'anneau (44) est configuré pour se loger dans la gorge longitudinale (40) de la tige filetée (26) en fonctionnement et **en ce que** l'anneau (44) comprend au moins un deuxième ergot configuré pour se loger dans la fente oblique (42) de l'écrou (28) en fonctionnement.

3. Boulon selon l'une des revendications précédentes, **caractérisé en ce que** la tige filetée (26) comprend deux gorges longitudinales (40, 40') diamétralement opposées et **en ce que** l'anneau (44) comprend deux premiers ergots (46), diamétralement opposés, configurés pour se loger dans les deux gorges longitudinales (40, 40').

4. Boulon selon l'une des revendications 1 à 2, **caractérisé en ce que** l'écrou (28) comprend plusieurs fentes obliques (42) réparties régulièrement sur toute la circonférence de l'écrou (28) et la tige filetée (26) comprend deux gorges longitudinales (40, 40') formant entre elles un angle π/n, n étant le nombre de fentes obliques (42) de l'écrou (28).

5. Boulon selon l'une quelconque des revendications précédentes, **caractérisé en ce que** chaque fente oblique (42) forme avec un plan transversal un angle (α) compris entre 30° et 75°.

6. Boulon selon l'une quelconque des revendications précédentes, **caractérisé en ce que** l'écrou (28) comprend un corps (50) dans lequel est prévu le trou taraudé (30) et une portion tubulaire (52), coaxiale au trou taraudé (30), comportant la (ou les) fente(s) oblique(s) (42).

7. Boulon selon la revendication précédente, **caractérisé en ce que** la portion tubulaire (52) présente un diamètre intérieur supérieur à celui du trou taraudé (30) pour former un logement (54) entre la portion tubulaire (52) et la tige filetée (26) lorsque la vis (22) est vissée dans l'écrou (28), l'anneau (44) étant configuré pour se loger dans ledit logement (54).

8. Boulon selon la revendication précédente, **caractérisé en ce que** chaque premier ergot (46) de l'anneau (44) est aligné radialement avec un deuxième ergot (48), chaque premier ergot (46) étant en saillie par rapport à une face intérieure de l'anneau (44) et chaque deuxième ergot (48) étant en saillie par rapport à une surface extérieure de l'anneau (44).

9. Boulon selon la revendication 7, **caractérisé en ce que** l'anneau (44) a un diamètre intérieur supérieur au diamètre extérieur de la portion tubulaire (52) de manière à l'entourer en fonctionnement et **en ce que** les premiers ergots (46) et les deuxièmes ergots (48) sont confondus, chaque premier ergot (46) étant configuré pour se loger en fonctionnement dans une fente oblique (42) et dans une gorge longitudinale (40, 40').

## Patentansprüche

1. Bolzen mit einer Gewindestange (26), die mindestens ein schraubenförmiges Gewinde (34) und mindestens eine Längsnut (40) aufweist, mit einer Mutter (28), die ein Gewindeloch (30), das zum Aufschrauben auf die Gewindestange (26) ausgebildet ist, und mindestens einen Schlitz (42) aufweist, und einer Verdrehsicherung (32), die dazu ausgebildet ist, die Mutter (28) gegen eine Drehung relativ zur Gewindestange (26) zu blockieren, wobei die Verdrehsicherung (32) einen Ring (44) umfasst, der zumindest die Gewindestange (26) umgibt und der zumindest einen ersten Vorsprung (46) aufweist, der dazu eingerichtet ist, bei Gebrauch in der Längsnut (40) der Gewindestange (26) und im Schlitz (42) der Mutter (28) aufgenommen zu werden, **dadurch gekennzeichnet, dass** der Schlitz (42) der Mutter (28) schräg ist und ein erstes offenes Ende (42.1) und ein zweites nicht offenes Ende(42.2) umfasst, wobei der schräge Schlitz (42) von dem ersten Ende (42.1) zu dem zweiten Ende (42.2) in dieselbe Richtung wie das schraubenförmige Gewinde (34) der Gewindestange (26) geneigt ist.

2. Bolzen nach Anspruch 1, **dadurch gekennzeichnet, dass** der erste Vorsprung (46) des Rings (44) so eingerichtet ist, dass dieser bei Gebrauch in die Längsnut (40) der Gewindestange (26) passt, und dass der Ring (44) mindestens einen zweiten Vorsprung umfasst, der so eingerichtet ist, dass dieser bei Gebrauch in den schrägen Schlitz (42) der Mutter (28) passt.

3. Bolzen nach einem der vorhergehenden Ansprüche, **dadurch gekennzeichnet, dass** die Gewindestange (26) zwei diametral gegenüberliegende Längsnuten (40, 40') aufweist und dass der Ring (44) zwei diametral gegenüberliegende erste Vorsprünge (46) aufweist, die so eingerichtet sind, dass diese in die beiden Längsnuten (40, 40') passen.

4. Bolzen nach einem der Ansprüche 1 bis 2, **dadurch gekennzeichnet, dass** die Mutter (28) eine Vielzahl von schrägen Schlitzen (42) aufweist, die regelmäßig über den gesamten Umfang der Mutter (28) verteilt sind, und dass die Gewindestange (26) zwei Längsnuten (40, 40') aufweist, die einen Winkel n/n zwischen sich bilden, wobei n die Anzahl der schrägen Schlitze (42) der Mutter (28) ist.

5. Bolzen nach einem der vorhergehenden Ansprüche, **dadurch gekennzeichnet, dass** jeder schräge Schlitz (42) mit einer Querebene einen Winkel (α) zwischen 30° und 75° bildet.

6. Bolzen nach einem der vorhergehenden Ansprüche, **dadurch gekennzeichnet, dass** die Mutter (28) einen Körper (50), in dem das Gewindeloch (30) vorgesehen ist, und einen zum Gewindeloch (30) koaxialen rohrförmigen Abschnitt (52) umfasst, der den/die schrägen Schlitz(e) (42) aufweist.

7. Bolzen nach dem vorhergehenden Anspruch, **dadurch gekennzeichnet, dass** der rohrförmige Abschnitt (52) einen Innendurchmesser hat, der größer ist als der des Gewindelochs (30), um eine Aufnahme (54) zwischen dem rohrförmigen Abschnitt (52) und der Gewindestange (26) zu bilden, wenn der Bolzen (22) in die Mutter (28) geschraubt ist, wobei der Ring (44) so eingerichtet ist, dass er in dem Gehäuse (54) untergebracht ist.

8. Bolzen nach dem vorhergehenden Anspruch, **dadurch gekennzeichnet, dass** jeder erste Vorsprung (46) des Rings (44) radial mit einem zweiten Vorsprung (48) fluchtet, wobei jeder erste Vorsprung (46) von einer Innenfläche des Rings (44) und jeder zweite Vorsprung (48) von einer Außenfläche des Rings (44) vorsteht.

9. Bolzen nach Anspruch 7, **dadurch gekennzeichnet, dass** der Ring (44) einen Innendurchmesser aufweist, der größer ist als der Außendurchmesser des rohrförmigen Abschnitts (52), so dass er diesen bei Gebrauch umgibt, und dass die ersten Vorsprünge (46) und die zweiten Vorsprünge (48) zusammengeführt sind, wobei jeder erste Vorsprung (46) so eingerichtet ist, dass er bei Gebrauch in einen schrägen Schlitz (42) und in eine Längsnut (40, 40') aufgenommen wird.

## Claims

1. Bolt comprising a threaded rod (26) having at least one helical thread (34) and at least one longitudinal groove (40), a nut (28) having a tapped hole (30) configured to be screwed onto the threaded rod (26) and at least one slit (42) as well as an anti-rotation device (32) configured to immobilize the rotation of the nut (28) with respect to the threaded rod (26), the anti-rotation device (32) comprising a ring (44) which surrounds at least the threaded rod (26) and which has at least one lug (46) configured to be housed in the longitudinal groove (40) of the threaded rod (26) and in the slit (42) of the nut (28) in operation, **characterized in that** the slit (42) of the nut (28) is oblique and has a first open end (42.1) and a second non-open end (42.2), said oblique slit (42) being inclined from the first end (42.1) to the second end (42.2) in the same direction as the helical thread (34) of the threaded rod (26).

2. Bolt according to Claim 1, **characterized in that** the first lug (46) of the ring (44) is configured to be housed in the longitudinal groove (40) of the threaded rod (26) in operation and **in that** the ring (44) comprises at least one second lug configured to be housed in the oblique slit (42) of the nut (28) in operation.

3. Bolt according to one of the preceding claims, **characterized in that** the threaded rod (26) comprises two diametrically opposite longitudinal grooves (40, 40') and **in that** the ring (44) comprises two first diametrically opposite lugs (46), configured to be housed in the two longitudinal grooves (40, 40').

4. Bolt according to one of Claims 1 and 2, **characterized in that** the nut (28) comprises several oblique slits (42) distributed regularly over the entire circumference of the nut (28) and the threaded rod (26) comprises two longitudinal grooves (40, 40') forming between them an angle π/n, n being the number of oblique slits (42) of the nut (28).

5. Bolt according to any one of the preceding claims, **characterized in that** each oblique slit (42) forms, with a transverse plane, an angle (α) lying between 30°and 75°.

6. Bolt according to any one of the preceding claims, **characterized in that** the nut (28) comprises a body (50) in which the tapped hole (30) is provided and a tubular portion (52), coaxial to the tapped hole (30), comprising the oblique slit or slits (42).

7. Bolt according to the preceding claim, **characterized in that** the tubular portion (52) has an inner diameter greater than that of the tapped hole (30) to form a space (54) between the tubular portion (52) and the threaded rod (26) when the screw (22) is screwed into the nut (28), the ring (44) being configured to be housed in said space (54).

8. Bolt according to the preceding claim, **characterized in that** each first lug (46) of the ring (44) is aligned radially with a second lug (48), each first lug (46) protruding from an inner face of the ring (44) and each second lug (48) protruding from an outer surface of the ring (44).

9. Bolt according to Claim 7, **characterized in that** the ring (44) has an inner diameter greater than the outer diameter of the tubular portion (52) so as to surround it in operation, and **in that** the first lugs (46) and the second lugs (48) are merged, each first lug (46) being configured to be housed in operation in an oblique slit (42) and in a longitudinal groove (40, 40').
